Europäisches Patentamt

European Patent Office

Office européen des brevets

(11) Veröffentlichungsnummer: **0 071 200**
**B1**

(12) **EUROPÄISCHE PATENTSCHRIFT**

(45) Veröffentlichungstag der Patentschrift:
**12.12.84**

(51) Int. Cl.³: **B 01 D 23/10,** B 01 D 23/20,
B 01 D 27/02, E 04 H 3/20

(21) Anmeldenummer: **82106632.1**

(22) Anmeldetag: **22.07.82**

(54) **Filterbehälter, insbesondere für Schwimmbecken.**

(30) Priorität: **28.07.81 DE 3129576**

(43) Veröffentlichungstag der Anmeldung:
**09.02.83 Patentblatt 83/6**

(45) Bekanntmachung des Hinweises auf die Patenterteilung:
**12.12.84 Patentblatt 84/50**

(84) Benannte Vertragsstaaten:
**AT BE CH DE FR GB IT LI NL SE**

(56) Entgegenhaltungen:
**AU - A - 52 363**
**US - A - 2 233 980**
**US - A - 3 812 969**
**US - A - 3 859 214**

(73) Patentinhaber: **Schydlo, Martin, Rosenstrasse 15,
D-4030 Ratingen (DE)**

(72) Erfinder: **Schydlo, Martin, Rosenstrasse 15,
D-4030 Ratingen (DE)**

(74) Vertreter: **Meyer, Alfred, Dipl.-Ing. Dr.jur.,
Schwanenmarkt 10, D-4000 Düsseldorf 1 (DE)**

### Beschreibung

Die Erfindung betrifft einen Filterbehälter, insbesondere für Schwimmbecken, der während des Filterbetriebes in der einen Richtung und während des Rückspülbetriebes in der entgegengesetzten Richtung durchströmt wird und jeweils einen als Zulauf und einen als Ablauf dienenden Anschlußstutzen aufweist, mit grobkörnigem Filtermaterial innerhalb des Filterbehälters und mit einem im Filterbehälter angeordneten Filterelement, das stirnseitig durch jeweils eine Abdeckung begrenzt ist, wobei der als Ablauf dienende Anschlußstutzen eine der Abdeckungen mittig durchsetzt.

Im allgemeinen ist in einem für Schwimmbeckenanlagen bestimmten Filterbehälter im Bereich eines sogenannten Düsenbodens körniges Material enthalten. Es gibt auch geschlitzte Böden aus Edelstahl oder sogenannte Filterkreuze. Diese haben feinste Bohrungen oder Schlitze, die verhältnismäßig klein bemessen sein müssen, um das grobkörnige Filtermaterial zurückzuhalten bzw. nicht durchtreten zu lassen. Trotz ihrer kleinen Abmessungen können aber die Bohrungen oder Schlitze das Hindurchtreten kleinster chemischer Bestandteile oder Ablagerungen nicht immer verhindern. Dies ist ebenso als nachteilig anzusehen wie die Tatsache, daß die die Flüssigkeitsdurchlässigkeit eines Düsenbodens oder eines Filterkreuzes bewirkenden Durchbrechungen im Laufe der Zeit aufreißen oder auch nur durch den beim Rückspülen auftretenden Staudruck aufgeweitet werden, so daß das körnige Filtermaterial hindurchtreten und in das Schwimmbecken gelangen kann. Bereits aus diesem Grunde sind Filterbehälter der bekannten Art nicht oder zumindest nach längerer Zeit nicht mehr rückspülfest. Wenn ein derartiger Filterbehälter gleichzeitig feinporiges Filtermaterial enthält, sind die beim Rückspülen auftretenden Schwierigkeiten noch größer.

Es ist aus der AU-A-52 363 ein Wasserenthärter in Form eines Behälters bekannt, der grobkörniges Ionenaustauscherharz enthält und an dessen Boden ein Filterelement angeordnet ist, in das Wasser eintritt. Das Filterelement hat an der oberen Abdeckung einen mittigen Anschlußstutzen, über den das gefilterte Wasser abgeleitet wird. Das Filterelement ist aus einem Stapel von Platten aufgebaut. Jeweils zwischen zwei benachbarten Platten ist ein in Umfangsrichtung umlaufender Spalt gebildet, durch den das Wasser in einen Ringraum eintritt. Es sind Abstandselemente vorgesehen, um einen gewünschten Mindestabstand der Platten im äußeren Umfangsbereich zu gewährleisten. Die Platten liegen entlang einer Kreislinie von entsprechendem Durchmesser fest aneinander an. Das Wasser wird im Bereich der Platten zunächst in eine axiale Richtung und dann in eine radiale Richtung nach innen umgelenkt, so daß es sich erst im mittleren Plattenbereich sammeln kann.

Das Filterelement dieses Wasserenthärters erfüllt aufgrund seines Aufbaus die Funktion, das grobkörnige Ionenaustauscherharz zurückzuhalten. Soweit letzteres zusätzlich auch als Filtermaterial wirkt, findet die Filterung des Wassers außerhalb des Filterelementes statt. Demgegenüber ist das Filterelement selbst als Filter beispielsweise für eine Schwimmbeckenanlage nicht geeignet.

Ausgehend von den eingangs genannten Gegebenheiten war es Aufgabe der vorliegenden Erfindung, einen Filterbehälter so auszubilden, daß er in ausreichendem Maße rückspülfest ist und daß sich ein einwandfreies Rückspülen auch dann gewährleisten läßt, wenn zwei unterschiedliche Filtermaterialien verwendet werden.

Zur Lösung dieser Aufgabe wird für einen Filterbehälter mit einem Filterelement, das stirnseitig durch jeweils eine Abdeckung begrenzt ist, wobei der als Ablauf dienende Anschlußstutzen eine der Abdeckungen mittig durchsetzt, erfindungsgemäß vorgeschlagen, daß zwischen die Abdeckungen zwei zueinander konzentrische Ringteile eingesetzt sind und daß sich zwischen diesen feinporiges Filtermaterial befindet.

Besonders geeignet ist erfindungsgemäß ein feinporiges Filtermaterial in Form eines Filtersterns aus Vlies- oder Stahlgewebe.

Aufgrund der von der Erfindung vorgeschlagenen Bauweise ergeben sich zwei voneinander eindeutig getrennte Filterstufen innerhalb des Filterbehälters. Der Rückspülvorgang wird also durch das Vorhandensein zweier unterschiedlicher Filtermaterialien nicht behindert. Ferner lassen sich die Ringteile des Filterelementes ohne Schwierigkeiten so stabil bemessen und auslegen, daß sowohl während des Filterbetriebes als auch während der Rückspülung auftretende mechanische Beanspruchungen keine nachteiligen Auswirkungen haben können. Bei jeder der beiden möglichen Strömungsrichtungen kann der Staudruck entweder von dem äußeren oder dem inneren Ringteil aufgenommen werden. Da während des Filterbetriebes die den Filterbehälter durchsetzende Flüssigkeit zunächst durch das grobkörnige Filtermaterial gereinigt wird, wird das feinporige Filtermaterial nicht durch die groben Schmutzbestandteile belastet. Hierin ist ein weiterer Vorteil für die erzielbare Reinigungswirkung zu sehen.

Ein weiterer Vorteil besteht darin, daß das Filterelement eine verhältnismäßig große wirksame Filterfläche haben kann, so daß die Durchsatzleistung des Filterbehälters entsprechend groß ist. Darüber hinaus ist es günstig, daß das Filterelement aufgrund der vorgeschlagenen Konstruktion eine Form erhält, die den Einbau in bereits vorhandene Filterbehälter beliebiger Form und Größe möglich macht, und zwar auch den nachträglichen Einbau.

Gemäß einer vorteilhaften Ausgestaltung der Erfindung kann zumindest eine der stirnseitigen Abdeckungen mit den Ringteilen lösbar verbunden sein. Hierdurch wird es möglich, das in dem Ringraum des Filterelementes befindliche Filtermaterial bei Bedarf in einfacher Weise auszuwechseln, ohne daß das ganze Filterelement erneuert werden muß.

Erfindungsgemäß kann das Filterelement nur an dem in den Innenraum des kleineren Ringteils mündenden und beim Filterbetrieb als Ablauf dienenden Anschlußstutzen befestigt sein. Hierdurch ergibt sich eine verhältnismäßig elastische Aufhängung des Filterelementes, so daß stärkere Druckschwankungen, wie sie zum Beispiel im Zusammenhang mit dem Rückspülbetrieb auftreten können, nicht zu einer Überbeanspruchung führen.

In weiterer Ausgestaltung der Erfindung wird vorgeschlagen, das Abdeckungen eines Filterelementes durchbrochen sind und daß der Innenraum des kleineren Ringteils an der dem Anschlußstutzen gegenüberliegenden Seite mit dem Anschlußstutzen eines nächsten Filterelementes verbunden ist.

Aufgrund der vorgeschlagenen Ausbildung lassen sich die Filterelemente in vorteilhafter Weise in Reihe schalten, wobei sie insbesondere auch gleichachsig aneinander gesetzt sein können. Hierdurch ist es auf einfache Weise möglich, die für einen Filterbehälter jeweils erforderliche Gesamtfilterfläche dem jeweiligen Bedarf anzupassen, wobei es für Herstellung, Montage und Lagerhaltung gleichermaßen günstig ist, daß diese Anpassung mit Hilfe von Filterelementen eines jeweils gleichen Typs erfolgen kann.

Alternativ ist es auch denkbar, mehrere Filterelemente parallel zu schalten, ihre austrittsseitigen Anschlußstutzen miteinander zu verbinden.

Nachfolgend werden Ausführungsbeispiele der Erfindung anhand einer Zeichnung näher beschrieben. Im einzelnen zeigt

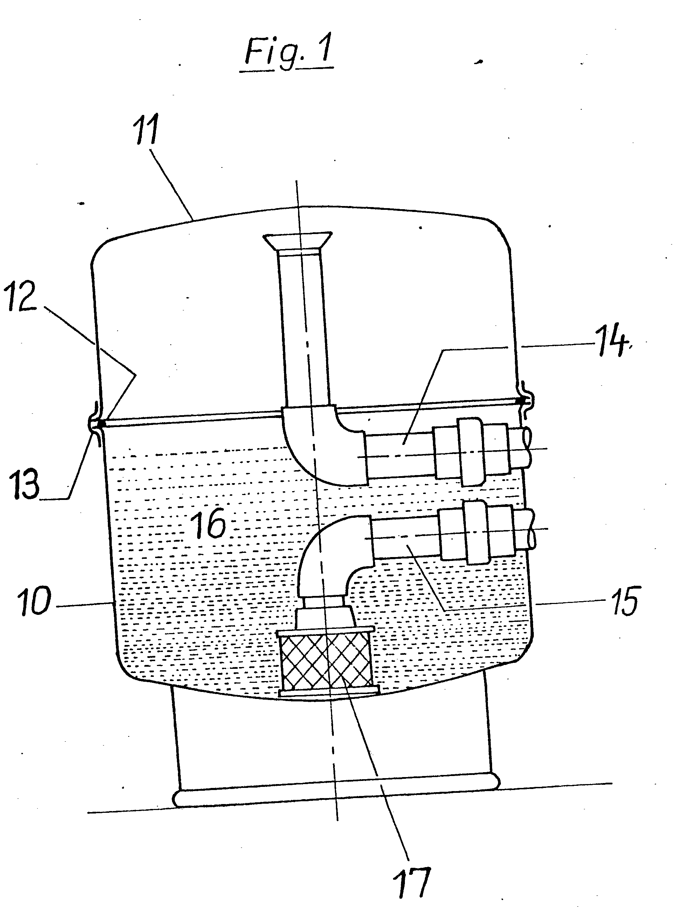

Fig. 1 einen schematischen Längsschnitt durch einen Flüssigkeitsbehälter;

Fig. 2 in vergrößertem Maßstab einen schematischen Längsschnitt durch ein Filterelement;

Fig. 3 und Fig. 4 jeweils in unterschiedlicher Anordnung mehrere hintereinander geschaltete Filterelemente in einem Flüssigkeitsbehälter;

Fig. 5 einen Flüssigkeitsbehälter mit parallel geschalteten Filterelementen.

Ein Filterbehälter 10 hat einen oberen Deckelteil 11, der angenähert dieselbe Höhe hat wie der Filterbehälter 10 selbst. Der Filterbehälter 10 und der Deckelteil 11 sind an ihren Rändern flanschförmig ausgebildet und gegeneinander mittels einer Ringdichtung 12 abgedichtet. Von außen her werden der Filterbehälter 10 und der Deckelteil 11 mittels eines Halteringes 13 zusammengehalten.

In den durch den Filterbehälter 10 und den Deckelteil 11 begrenzten Innenraum münden ein erster, als Zulauf dienender Anschlußstutzen 14 und ein zweiter, als Ablauf dienender Anschlußstutzen 15. Der Filterbehälter 10 ist mit körnigem Filtermaterial 16 gefüllt. Am Boden des Filterbehälters 10 befindet sich ein Filterelement 17, das an den Anschlußstutzen 15 angeschlossen und nur gegenüber diesem befestigt ist. Die Befestigung ist jedoch leicht lösbar, um das Filterelement 17 oder Teile desselben auswechseln zu können.

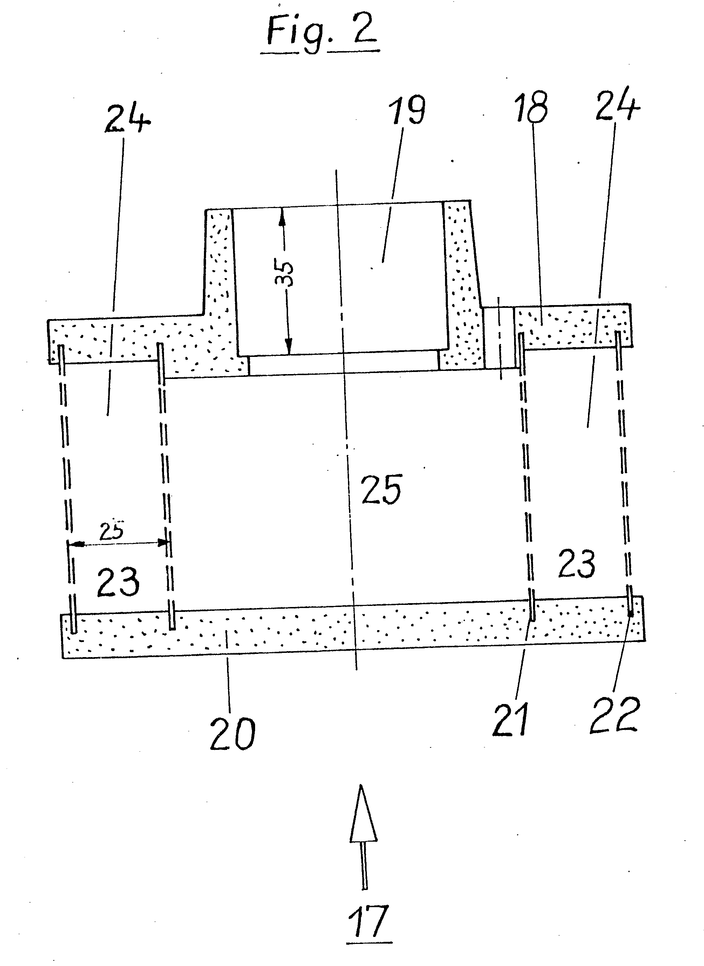

Der Aufbau des Filterelementes 17 ist im einzelnen in Fig. 2 dargestellt. Eine obere Abdeckung 18 hat ihrerseits einen Anschlußstutzen 19, in den der Anschlußstutzen 15 eingesteckt werden kann. Zwischen der oberen Abdeckung 18 und einer unteren Abdeckung 20, die beide jeweils einen kreisförmigen Querschnitt haben, sind zwei Ringteile 21 und 22 konzentrisch zueinander angeordnet. Der Ringteil 21 bildet eine innere Begrenzung für einen Ringraum 23, der nach außen hin durch den Ringteil 22 von entsprechend größerem Durchmesser begrenzt wird. Innerhalb des Ringraumes 23 befindet sich vliesartiges Filtermaterial 24 in Form eines Papier-Filtersternes. Die Ringteile 21 und 22 sind vorzugsweise lösbar zumindest mit einer der Abdeckungen 19 oder 20 verbunden, um das Filtermaterial 24 im Bedarfsfall auswechseln zu können. Der Anschlußstutzen 19 der Abdeckung 18 mündet in einen Innenraum 25, dessen Größe durch den Durchmesser des inneren Ringteils 21 bestimmt ist.

Im Verlauf der Anschlußstutzen 14 und 15 sind Verschraubungen vorgesehen, um die inneren Teile derselben gegebenenfalls entfernen zu können. Im Durchtrittsbereich durch den Filterbehälter 10 sind die Anschlußstutzen 14 und 15 verschweißt.

Bei Verwendung des beschriebenen Flüssigkeitsfilters z. B. in einer Schwimmbeckenanlage strömt das zu reinigende Wasser durch den Anschlußstutzen 14 in den Innenraum des Filterbehälters 10 bzw. des Deckelteils 11 und durchsetzt zunächst das körnige Filtermaterial 16. Anschließend gelangt das Wasser in das Filterelement 17, in dem ihm auch die feinsten Ablagerungen entnommen werden können. Anschließend strömt das Wasser aus dem Innenraum 25 des Filterelementes 17 und durch die Anschlußstutzen 19 und 15 aus dem Filterbehälter 10 heraus.

Beim Rückspülen durchsetzt das Wasser den Filterbehälter 10 in umgekehrter Richtung.

Ein nach der Erfindung ausgebildetes Flüssigkeitsfilter ist jedoch nicht nur für Schwimmbeckenanlagen verwendbar, sondern in allen Fällen, in denen Wasser oder auch eine andere Flüssigkeit von Schmutz und/oder anderen störenden Bestandteilen zu reinigen ist.

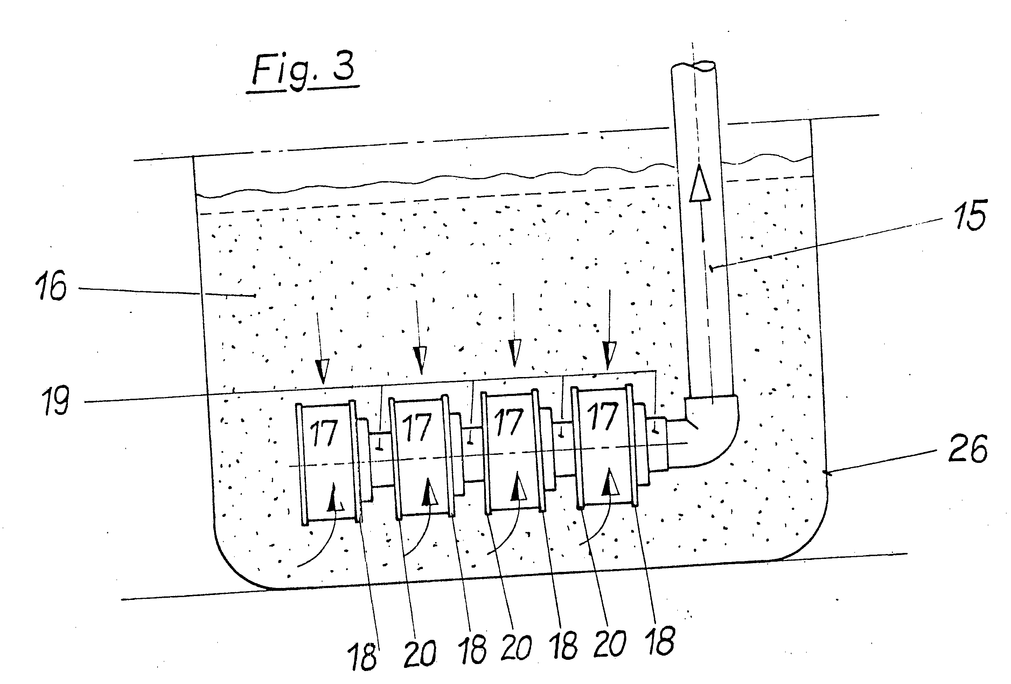

In Fig. 3 ist ein Filterbehälter 26 dargestellt, der ebenfalls mit grobkörnigem Filtermaterial 16 gefüllt ist. Es ist nur der als Ablauf dienende Anschlußstutzen 15 dargestellt, während der als Zulauf dienende Anschlußstutzen nicht sichtbar ist.

Es sind mehrere Filterelemente 17 gleichachsig zueinander in Reihenschaltung angeordnet. Bei den zwischen dem letzten Filterelement 17 und dem Anschlußstutzen 15 liegenden Filterelement 17 ist jetzt auch die Abdeckung 20 durchbrochen und so ausgebildet, daß der Anschlußstutzen 19 des jeweils benachbarten Filterelementes 17 in die Durchbrechung eingesteckt werden kann, so daß die Innenräume 25 aller Filterelemente 17 miteinander verbunden sind.

Die Filterelemente 17 sind in das grobkörnige Filtermaterial 16 eingebettet, ohne durch zusätzliche Konstruktionsteile befestigt zu sein.

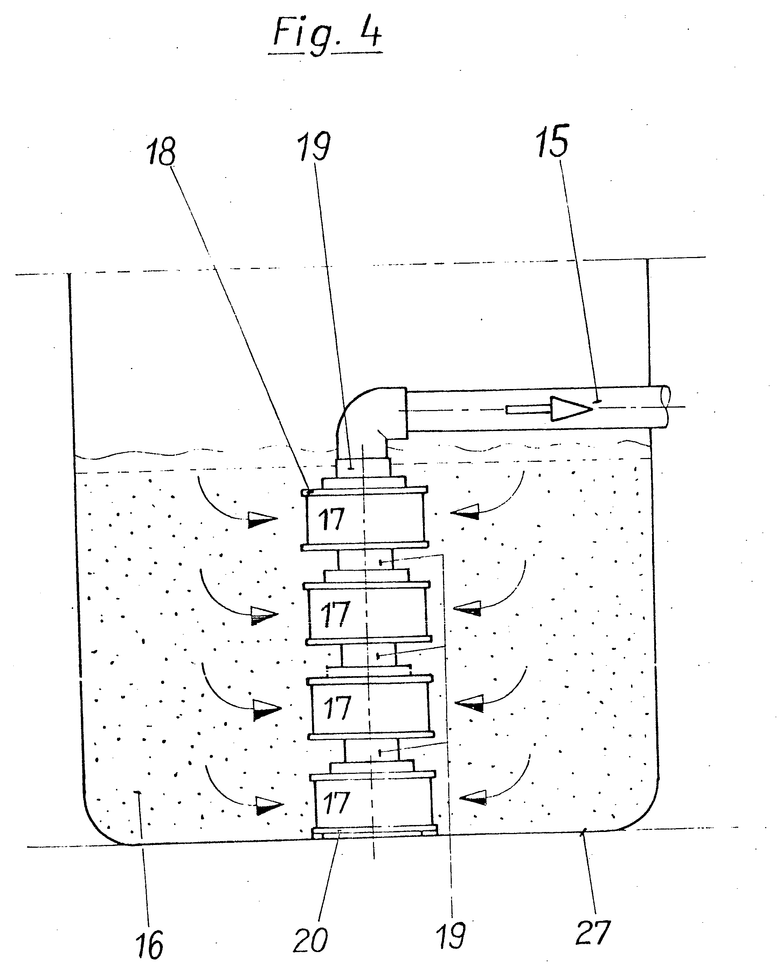

In Fig. 4 ist dargestellt, wie die aus den Filterelementen und dem Anschlußstutzen 15 bestehende Anordnung in einen schmäleren Filterbehälter 27 in vertikaler Lage eingesetzt werden kann.

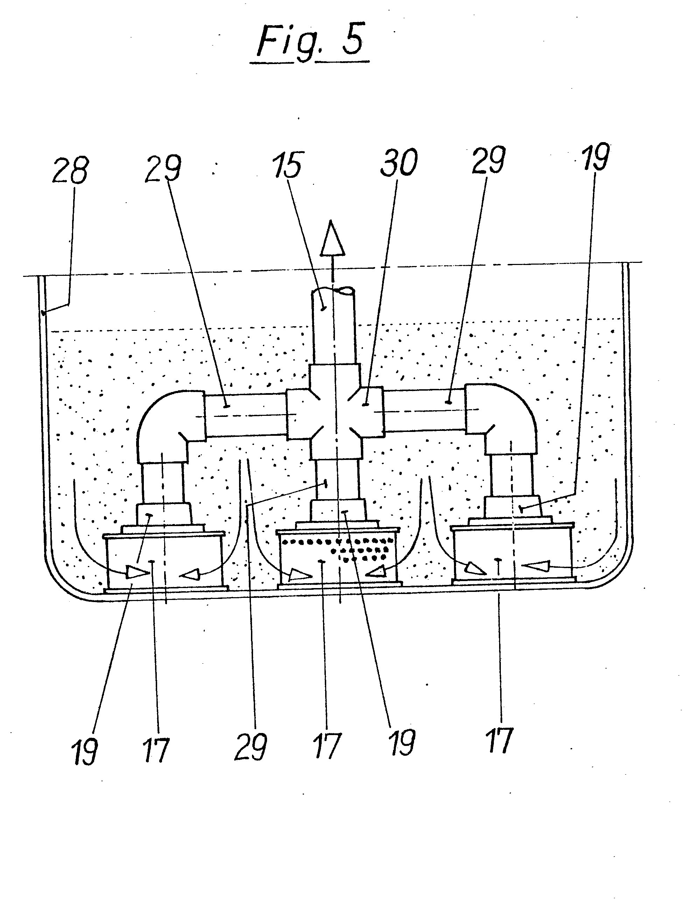

Fig. 5 zeigt einen Filterbehälter 28, der drei Filterelemente 17 enthält. Die ausgangsseitigen Anschlußstutzen 19 derselben sind mittels Verbindungsleitungen 29 zusammengeschaltet. Der Anschlußstutzen 15 ist an eine Verbindungsmuffe 30 angeschlossen, in die auch die Verbindungsleitungen 29 münden.

In diesem Fall sind also die Filterelemente 17 parallel geschaltet.

Diese Beispiele lassen erkennen, daß nicht nur die Anpassung der jeweils erforderlichen Filterfläche durch die Wahl einer entsprechenden Anzahl von Filterelementen 17 möglich ist, sondern daß gleichzeitig auch die räumliche Anordnung der Filterelemente 17 so gewählt werden kann, daß eine Anpassung an die Form des jeweiligen Filterbehälters möglich ist.

Aufgrund der Tatsache, daß die Gesamtgröße der jeweiligen Filterfläche ohne Schwierigkeiten verhältnismäßig groß bemessen werden kann, ergibt sich auch der weitere Vorteil, daß sich der Strömungswiderstand im Bereich des Filterelementes entsprechend stark herabsetzen läßt. Dies wiederum bedeutet, daß relativ wenig Energie aufgewendet werden muß, um die Flüssigkeit durch den Filterbehälter strömen zu lassen.

Als feinporiges Filtermaterial ist u. a. auch ein Edelstahl-Gewebe sehr gut geeignet.

## Patentansprüche

1. Filterbehälter, insbesondere für Schwimmbecken, der während des Filterbetriebes in der einen Richtung und während des Rückspülbetriebes in der entgegengesetzten Richtung durchströmt wird und jeweils einen als Zulauf und einen als Ablauf dienenden Anschlußstutzen (14, 15) aufweist, mit grobkörnigem Filtermaterial (16) innerhalb des Filterbehälters (10) und mit einem im Filterbehälter angeordneten Filterelement (17), das stirnseitig durch jeweils eine Abdeckung (18, 20) begrenzt ist, wobei der als Ablauf dienende Anschlußstutzen (15) eine der Abdeckungen (18) mittig durchsetzt, dadurch gekennzeichnet, daß zwischen die Abdeckungen (18, 20) zwei zueinander konzentrische Ringteile (21, 22) eingesetzt sind und daß sich zwischen diesen feinporiges Filtermaterial (24) befindet.

2. Filterbehälter nach Anspruch 1, dadurch gekennzeichnet, daß das feinporige Filtermaterial (24) ein Filterstern aus Vlies oder Stahlgewebe ist.

3. Filterbehälter nach Anspruch 1 oder 2, dadurch gekennzeichnet, daß zumindest eine der stirnseitigen Abdeckungen (18, 20) mit den Ringteilen (21, 22) lösbar verbunden ist.

4. Filterbehälter nach einem der vorherigen Ansprüche, dadurch gekennzeichnet, daß das Filterelement (17) nur an dem in den Innenraum (25) des kleineren Ringteils (21) mündenden Anschlußstutzen (15) befestigt ist.

5. Filterbehälter nach einem der vorherigen Ansprüche, dadurch gekennzeichnet, daß beide Abdeckungen (18, 20) eines Filterelementes (17) durchbrochen sind und daß der Innenraum (25) des kleineren Ringteils (21) an der dem Anschlußstutzen (19) gegenüberliegenden Seite mit dem Anschlußstutzen (19) eines nächsten Filterelementes (17) verbunden ist.

6. Filterbehälter nach Anspruch 5, dadurch gekennzeichnet, daß mehrere Filterelemente (17) gleichachsig aneinandergesetzt sind.

7. Filterbehälter nach einem der Ansprüche 1 bis 4, dadurch gekennzeichnet, daß mehrere Filterelemente (17) parallel geschaltet sind.

## Claims

1. Filter vessel, especially for swimming pools, through which vessel flow takes place in one direction during filtering operation and in the opposite direction during backwashing operation, the vessel having two connecting nozzles (14, 15), one serving as an inlet and the other as an outlet, coarsely granular filter material (16) being located within the filter vessel (10), and a filter element (17) being arranged in the filter vessel and being delimited by a cover (18, 20) on each of its end faces, the connecting nozzle (15) serving as the outlet passing centrally through one of the covers (18), characterised in that between the covers (18, 20) there are inserted two mutually concentric ring components (21, 22) and that finely porous filter material (24) is located between these.

2. Filter vessel according to claim 1, characterised in that the finely porous filter material (24) is a filter star made of a nonwoven fabric or steel fabric.

3. Filter vessel according to claim 1 or 2, characterised in that at least one of the end-face covers (18, 20) is detachably connected to the ring components (21, 22).

4. Filter vessel according to one of the preceding claims, characterised in that the filter element (17) is only fixed to the connecting nozzle (15) which opens into the inner chamber (25) of the smaller ring component (21).

5. Filter vessel according to one of the preceding claims, characterised in that both covers (18, 20) of a filter element (17) are perforated and that the inner chamber (25) of the smaller ring component (21) is connected, on the side facing the connecting nozzle (19), to the connecting nozzle (19) of the next filter element (17).

6. Filter vessel according to claim 5, characterised in that a plurality of filter elements (17) are assembled together coaxially.

7. Filter vessel according to one of claims 1 to 4, characterised in that a plurality of filter elements (17) are connected in parallel.

## Revendications

1. Récipient de filtration, particulièrement pour piscine, qui est traversé pendant le processus de filtration dans une direction et pendant le processus de rinçage à contre-courant dans la direction inverse et qui présente dans chaque cas des tubulures (14, 15) servant l'une pour l'entrée et l'autre pour la sortie, avec de la matière filtrante à gros grain (16) dans le récipient de filtration (10) et avec un élément de filtration (17) disposé dans le récipient de filtration, élément qui est délimité frontalement de chaque côté par un recouvrement (18, 20), la tubulure (15) servant de sortie traversant par le centre un des recouvrements (18), caractérisé en ce qu'entre les recouvrements (18, 20) sont enserrés deux éléments annulaires (21, 22) concentriques entr'eux et en ce que se trouve entre ces éléments une matière filtrante microporeuse (24).

2. Récipient de filtration suivant la revendication 1, caractérisé en ce que la matière filtrante microporeuse (24) consiste en une étoile filtrante en nappe de fibres ou en treillis métallique.

3. Récipient de filtration suivant l'une quelconque des revendications 1 et 2, caractérisé en ce qu'au moins un des recouvrements frontaux (18, 20) est relié de manière amovible aux éléments annulaires (21, 22).

4. Récipient de filtration suivant l'une quelconque des revendications précédentes, caractérisé en ce que l'élément de filtration (17) est fixé seulement sur la tubulure (15) débouchant dans la chambre interne (25) du plus petit élément annulaire (21).

5. Récipient de filtration suivant l'une quelconque des revendications précédentes, caractérisé en ce que les deux recouvrements (18, 20) d'un élément de filtration (17) sont percés et en ce que la chambre interne (25) du plus petit élément annulaire (21) est reliée du côté opposé au raccordement (19) avec le raccordement (19) d'un élément du filtration voisin (17).

6. Récipient de filtration suivant la revendication 5, caractérisé en ce que plusieurs éléments de filtration (17) sont disposés l'un par rapport à l'autre sur un même axe.

7. Récipient de filtration suivant l'une quelconque des revendications 1 à 4, caractérisé en ce que plusieurs éléments de filtration (17) sont montés en parallèle.

## Fig. 1

# Fig. 2

_Fig. 3_

0 071 200

# _Fig. 4_

## Fig. 5